# EUROPEAN PATENT APPLICATION

(11) **EP 2 423 267 A1**
(43) Date of publication of application: **29.02.2012**
(21) Application number: 11180269.0
(22) Date of filing: 06.09.2011
(51) Int. Cl.: C09D 5/00, C09D 5/18, C09D 17/00, C09B 67/00, G02B 1/11, C09D 7/12

(54) **Coating with Improved Heat Reflection**

(30) Priority: 30.08.2010 US 378238 P
(71) Applicant: Milgard Manufacturing Incorporated, Tacoma, WA 98424 (US)
(72) Inventor: The designation of the inventor has not yet been filed
(74) Representative: Croston, David

(57) **Abstract**

A method of protecting against overcurrent conditions controls a solid state switch to turn OFF to prevent a flow of current along a first current path in response to an overcurrent condition exceeding a predefined current threshold, or a predefined current threshold and a predefined energy threshold. Current is selectively passed along a second current path that is parallel to the first current path in response to the solid state switch turning OFF. An overcurrent detection device that is upstream of the first current path and the second current path is used to detect at least partially via the second current path whether the overcurrent condition corresponds to a predefined fault condition downstream of the current paths.

## Description

### BACKGROUND

The present application relates generally to paints or coatings for articles that may be used in environments in which they will be exposed to sunlight or other sources of incident light energy. Such paints or coatings are intended to provide an aesthetically pleasing appearance while reducing potentially adverse thermal effects within the article as a result of absorbed energy from incident radiation.

In certain applications, it may be desirable to provide an aesthetically pleasing colored exterior surface appearance for articles that may be exposed to sunlight or other incident light energy. For example, housing components such as doors, windows, vinyl siding, and the like may be used in a manner such that one or more of their external surfaces are exposed to sunlight.

Electromagnetic radiation (e.g., from sunlight) impacting an object includes radiation in the infrared (IR), visible, and ultraviolet (UV) spectra. The color of an article perceived by a viewer is a physical phenomenon in which some of the wavelengths in the visible spectrum are absorbed by the object while the others are reflected back. For example, when all wavelengths in the visible spectrum are reflected back toward the viewer, the color of the object will appear to be white. Conversely, if all of the wavelengths are absorbed by the object, the color will appear to be black.

One way to characterize the color of an object is to use a color space system such as the 1976 CIE L*a*b* color space. In this three-coordinate color space system, L* represents the lightness of the color on a scale from 0 to 100 (with 100 being completely white and 0 completely black), a* represents the value on the red/magenta and green axis (negative values indicate green while positive values indicate red/magenta), and b* represents the value on the yellow and blue axis (negative values indicate blue while positive values indicate yellow). Thus, the a* and b* values characterize the hue of the color while the L* value describes the brightness of the color.

Wavelengths in the IR and UV spectra do not contribute to how the color is perceived to the naked eye. These wavelengths do, however, carry energy that may be absorbed by an object, particularly in cases where the object has a relatively dark color. This absorbed energy may cause the temperature of the object to increase. In some cases, this may cause undesirable effects. For example, in the case of a substrate formed of a polymeric material such as polyvinyl chloride (PVC) that is coated with a dark colored paint, incident IR, UV, and visible radiation may cause an increase in the internal temperature of the substrate to the point where the substrate begins to soften or melt. Where the dimensional stability of the substrate is important, the resulting shape change (e.g., bending, bowing, etc.) can adversely affect the performance of the article.

It would be advantageous to provide a coating for articles that reflects a significant amount of incident IR, UV, as well as the majority of unwanted visible radiation so as to reduce the heat absorption for the articles. It would also be desirable to provide a coating that has a relatively dark color that may be applied to polymeric substrates such as PVC or the like that will resist undesirable heating of the substrate when exposed to sunlight such that the dimensional stability of the substrate may be retained.

### SUMMARY

An exemplary embodiment relates to a colorant formulation for use in paint that includes a titanium dioxide dispersion and at least one pigment that has an infrared reflectance of at least approximately 60 percent when provided in a clear base over a white substrate and less than approximately 40 percent when provided in a clear base over a black substrate. The colorant formulation does not include pigments that have an infrared reflectance of less than approximately 60 percent when provided in a clear base over a white substrate. The colorant formulation is configured to provide a total solar reflectance for the paint of at least about 50 percent when provided over a white substrate.

Another exemplary embodiment relates to a paint that includes a base resin formulation and a colorant formulation comprising a titanium dioxide dispersion and a first pigment that has an infrared reflectance of at least approximately 60 percent when provided in a clear base over a white substrate and less than approximately 40 percent when provided in a clear base over a black substrate. The colorant formulation does not include pigments that have an infrared reflectance of less than approximately 60 percent when provided in a clear base over a white substrate. The colorant formulation is configured to provide a total solar reflectance for the paint of at least about 50 percent when provided over a white substrate.

Another exemplary embodiment relates to a coated article that includes a polymeric substrate having an L* value of at least 80 and a total solar reflectance of at least 80 and a coating comprising a titanium oxide dispersion and at least one type of pigment, wherein the coating does not include pigments that have an infrared reflectance of less than approximately 60 percent when provided in a clear base over a white substrate. The coating has an L* value of less than 40 and a total solar reflectance of greater than 50.

### BRIEF DESCRIPTION OF THE DRAWINGS

FIG. 1 is a side view of a substrate having a coating provided on a surface thereof according to an exemplary embodiment.

FIG. 2 is a plan view of a window that may have a coating provided thereon according to an exemplary embodiment.

FIG. 3 is a plan view of a door that may have a coating provided thereon according to an exemplary embodiment.

FIG. 4 is a plan view of an architectural siding material that may have a coating provided thereon according to an exemplary embodiment.

FIG. 5 is a graph illustrating the infrared reflectance characteristics of various pigments or colorants according to an exemplary embodiment.

FIG. 6 is a graph illustrating the infrared reflectance characteristics of various brown and black pigments or colorants according to an exemplary embodiment.

FIG. 7 is a graph illustrating the reflectance spectra for a coated article having a regular brown coating and a heat-reflective brown coating produced according to an exemplary embodiment.

FIG. 8 is a graph illustrating the impact on the L* values and total solar reflectance of coatings as a function of the amount of TiO₂ included in a coating material.

### DETAILED DESCRIPTION

According to an exemplary embodiment, a coating (e.g., a paint) includes a colorant formulation that is configured to reduce the amount of heat absorbed by an article on which the coating is applied, particularly in cases where the colorant formulation is used to produce a dark colored paint that is to be applied to the surface of a substrate that has relatively high reflectivity (e.g., a white substrate formed of a polymeric material such as polyvinyl chloride or PVC). The colorant formulation utilizes pigments or colorants that are generally reflective or transparent to infrared radiation and at least partially to visible radiation. According to one particular embodiment, the colorant formulation may be used to form a relatively dark colored coating (having an L* value of less than approximately 40, such as between approximately 32 and 40 or between approximately 34 and 40) that may be applied to a light colored substrate (e.g., a white PVC substrate) such that the coated article may reflect a sufficient amount of heat to maintain the temperature of the article below the softening or melting temperature of the substrate.

Coatings such as paint typically include components such as pigments, binders, liquids, and additives.

Pigments or colorants are used as part of a colorant formulation that provides color to the paint. Pigments are typically of mineral or organic origin, although some pigments are artificially produced. Some pigments possess little or no bulk and must be fixed on a more solid, but at the same time transparent, substance or base. "Prime" pigments are those pigments that provide color and opacity (opaque coverage). The most common prime pigment is titanium dioxide (TiO₂), which is white and is used in latex and oil-based paints. The amount of TiO₂ included in a colorant formulation may be used to adjust the L* value for the paint and to reflect visible light. By adjusting the amount of TiO₂ within the colorant formulation, the colorant formulation may be made lighter or darker. According to an exemplary embodiment, the TiO₂ may be coated with other materials such as alumina, zirconia, or various organic materials, for example, to control the dispersibility of the TiO₂.

Traditionally, pigments have also added hiding properties to paint. Specialty or extender pigments may also be used and provide bulk to the paint at a low cost. The extender pigments are often chosen for their impact on properties like scrub resistance, stain resistance, and chalk resistance. Alum or clay are frequently used for this purpose. These pigments are added to the paint to provide certain characteristics such as thickness, gloss, and durability. They are usually naturally occurring products which originally were in the earth and were mined and purified for use in paint. Pigments as calcium carbonate, talc, and clay are used extensively in paints.

The binders hold the pigments and also adhere them to a surface. A binder composition may include more than one component. In latex paint, the latex resin may act as a binder. Most commonly in latex paint, the binder is an acrylic, vinyl acrylic (polyvinyl acetate), or styreneated acrylic material. The pigment particles are insoluble and merely form a suspension in the binder. The binder "binds" the pigment into a tough, continuous film and, as noted above, helps the paint adhere to the surface. In addition, it has been found previously that the use of 100% acrylic binder provides for maximum adhesion when wet and also provides for resistance to blistering and peeling, resistance to mildew and dirt, and alkali resistance for paint applied over fresh masonry.

Liquids carry the pigment and binders, and keep the paint in a fluid form for ease of application. Depending on their chemical makeup, once applied to the surface, the liquids may cure completely (e.g., forming solid resin systems), or can evaporate, in which case they may leave a uniform film which would then dry to form a protective coating. In the latter case, the liquid used is primarily determined by the solubility of the binder. In oil-based and alkyd paints, the liquid is typically a paint thinner, and in latex paints, the liquid is typically water. Traditionally, top quality paints have less liquid and more solids (i.e. pigment & binders), as measured in terms of the percent solids for a given paint formulation.

Additives are ingredients used at low levels to provide key properties, including but not limited to mildew resistance, flow and leveling, and splatter resistance. Common additives used in paint formulations include rheology modifiers, surfactants, defoamers, coalescents, and biocides. Other additives are well-known in the art and may be utilized as required to formulate a paint having desired properties.

Various techniques are known in the art for producing paints having various types of sheens (e.g., "shine" or gloss). For example, by incrementally increasing pigment levels and/or by using larger pigment particles, various gloss levels can be achieved including, but not limited to flat, satin, and semi-gloss. The pigment volume concentration, which is defined as the unit volume of pigments as a percentage of the volume of pigments plus the volume of the binder, is often associated with the paint finish, although various finishes may have overlapping ranges of pigment volume concentration. The pigment volume concentration may be used to represent the relationship between the durability of the coating and the amount of pigment included therein.

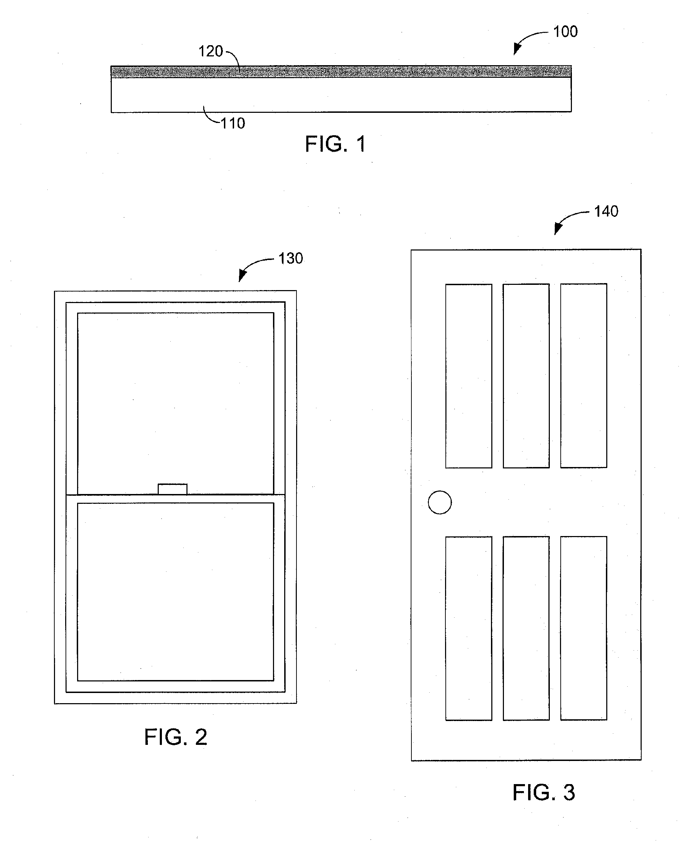

FIG. 1 illustrates an article 100 that includes a substrate 110 having a coating 120 (e.g., a paint) applied to at least a portion thereof. The coating 120 may include a colorant formulation including pigments that are intended to improve the total heat-reflectivity of the coating to reduce the amount of heat absorbed by articles to which the coating is applied.

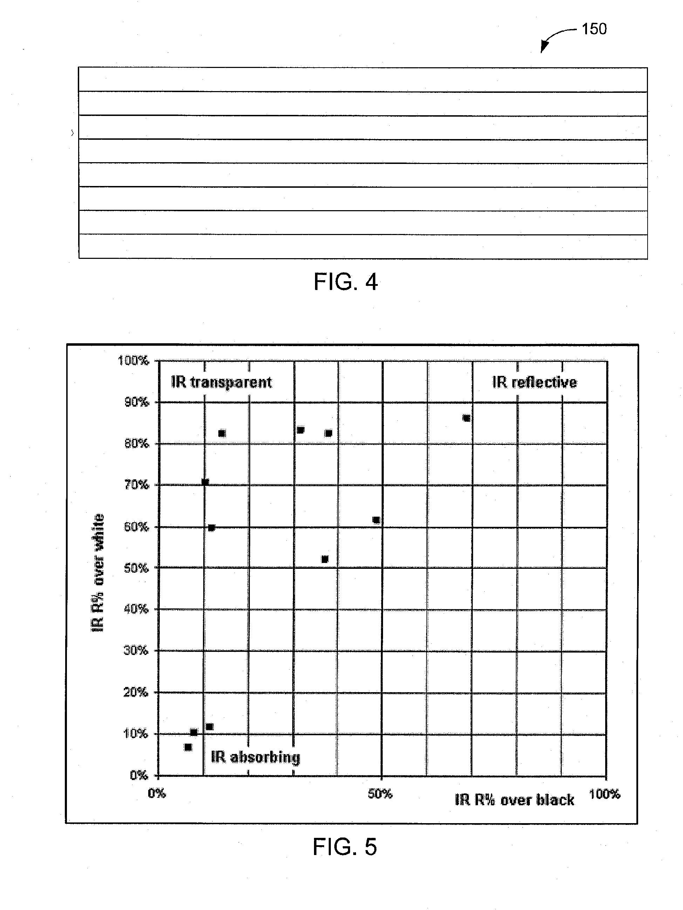

The substrate 110 may be part of an article such as a window frame 130 (see, e.g., FIG. 2), a door 140 (see, e.g., FIG. 3), polymeric (e.g., vinyl) siding 150 for exterior housing applications (see, e.g., FIG. 4), or any other article that may be subject to incident light radiation such as sunlight. According to an exemplary embodiment, the substrate 110 is made of a material that includes a thermoplastic polymeric material such as polyvinyl chloride (PVC), polypropylene (PP), polyethylene (PE), or mixtures, combinations, or copolymers thereof. The substrate 110 could also be made of a thermoset material such as an epoxy, a polyester material, a polyurethane material, or mixtures or combinations thereof.

According to an exemplary embodiment, the substrate 110 has a light-colored surface appearance (e.g., white or a variation of white), although according to other exemplary embodiments, the substrate 110 may have a different color. The makeup of the substrate may act to reflect some or most of any incident IR radiation that travels through the coating and impacts the surface of the substrate such that it may be reflected back from the surface. According to a particular exemplary embodiment, the substrate is a relatively highly reflective substrating having an L* value of at least approximately 80 and a total solar reflectance (TSR) value of greater than approximately 80%. The TSR value is the integral of the percent reflectance times the solar irradiance divided by the integral of the solar irradiance, and is a measure of the amount of incident solar energy that is reflected from a surface.

According to an exemplary embodiment, the coating has a relatively dark color (e.g., an L* value less than approximately 40 (e.g., between approximately 32 and 40 or between approximately 34 and 40). Although the coating may have a brown or black color according to particular exemplary embodiments, those reviewing the present disclosure will appreciate that the coating may have any of a variety of other colors according to other exemplary embodiments (e.g., green, blue, red, etc.), and that the a* and b* values for the coating may be varied to produce any color desired for a particular coating. All such variations are intended to be included within the scope of the present disclosure.

The coating may be based on any suitable resin system, including a 100% acrylic resin, a styrene-acrylic resin, a one-part polyurethane dispersion, a two-part polyurethane dispersion system, a waterborne acrylic polyurethane dispersion, a silicone resin emulsion, a fluorinated acrylic polymer, a silicone acrylic hybrid polymer, or other polymer systems suitable for indoor or outdoor painting or coating applications. According to some embodiments, the resins may be water-based suspensions or a reactive multi-component mixture such as those commonly supplied by raw material and chemical suppliers.

The binders, liquids, and additives for the coating may be selected to provide physical properties for the coating that are suitable for a particular application such as adhesion to the substrate, film hardness, weathering durability, solvent resistance, and applicability (e.g., spaying, brushing, rolling, etc.).

According to an exemplary embodiment, the coating has an applied thickness of less than 10 mils, although according to other exemplary embodiments, the thickness of the coating may vary according to various considerations.

The pigments used in the colorant formulation may be any of a variety of pigments such as Sicopal®, Sicotan®, Lumogen®, and Paliogen® colorants commercially available from BASF: Sicopal® black K0095, Sicotan Yellow L2110, Lumegan black FK4280, and Paliogen Black L0086, etc; Cool Colors® and Eclipse® colorants commercially available from Ferro Corporation: IR green 21-4047, blue 22-5096, brown 24-10430, 26-10550, black 24-10204, 24-10466, etc; HEUCODUR® IR colorants commercially available from Heucobach GmbH and Heucotech Ltd.: Blue 550, 552, green 600, 654, brown 855, 869, black 920, 940, 950, etc; Infracool® colorants commercially available from Plasticolors Inc.: IRR black 50-990-02355, 50-990-02358, 50-990-02364, 50-990-20957, 50-990-20968, bright blue IRR 50-990-30385R, brown IR 50-990-400092R, high IR green 50-990-50214R, yellow IRR 50-990-80486R, etc; and Arctic® and Dynamix® colorants commercially available from the Shepherd Color Company: Arctic® black 10C909, 411A, blue 212, green 223, brown 8, brown 12, brown 20, Dynamix® black 30C940, blue 30C588, green 30C678, etc.

According to an exemplary embodiment, the pigments used in the coating utilize both infrared reflective and infrared transparent phenomena to achieve the desired color (as determined by the reflectance of the visible light) while maximizing the total heat-reflectivity for the coated article. Because the substrate of the article is formed from a thermoplastic material, it is desirable to reflect as much of the heat as possible to maintain the surface temperature of the article at a level that is below its thermal transition (e.g., softening) temperature.

The colorant formulation (which is provided as a dispersion of various pigments, including TiO₂ pigments) can be either added to the paint in the paint-making process as a pre-tinted product or, alternatively, may be added after the fact to a clear base at the brush/spray application site. Among the resin systems reviewed by the inventors, paint made out of one part polyurethane dispersion and infrared reflective/transparent pigments was observed to have good heat reflectance and acceptable adhesion over the vinyl substrate, fairly good hardness, and some resistance to household cleaners. Two part polyurethane system with the same infrared reflective/transparent pigments can improve the film hardness, durability, the strength of adhesion to the substrate, and the chemical resistance.

One challenge associated with known dark-colored coatings is that such coatings tend to reduce the TSR of a coated substrate, which in turn may cause undesirable heating of the substrate to a level that may produce unsatisfactory results such as softening or melting of the substrate. For polymeric substrates such as PVC, PE, PP, it is desirable to maintain the temperature of the substrate below its softening or melting temperature of the substrate material to avoid undesirable dimensional changes. Knowing the upper limit of the acceptable temperature range for the substrate, the acceptable TSR limit for the substrate may be calculated by correlating the TSR with the surface temperature of the substrate. In the case of a polymeric substrate such as PVC, the inventors have determined that it is desirable to maintain a TSR level of 50% or higher, and greater than 53% according to an exemplary embodiment.

It has been discovered by the inventors that heat-reflective dark color paint that maintains a relatively high TSR value for an article may be produced by focusing on increasing the reflection of radiation that is in the infrared wavelength range (as opposed to incident radiation in the visible wavelength range or the UV range). Because IR-absorbing pigments may significantly reduce the TSR for a coated article even when used in relatively small amounts in a mixture with other types of pigments (e.g., IR-reflective or IR-transparent colorants), it is desirable to avoid the use of such pigments. When applied over a light colored (e.g., white) substrate, such as a white PVC substrate that may find utility in a variety of applications such as windows, doors, vinyl siding, and the like, a relatively high TSR value for the coated article may be obtained even in the case of a dark coating (e.g., dark brown) when the pigments in the colorant formulation are selected in a manner that avoids the use of IR-absorbing pigments.

Black and dark brown pigments are normally used to adjust the brightness of color formulations (i.e., the L* value in the CIE L*a*b* color system). For example, if a dark brown coating is desired, both dark brown and black pigments may be used in the color formulation to arrive at the desired color and brightness level. Many commercially-available black and brown pigments are IR-absorbing by nature. To produce a dark coating that has a TSR value that is high enough to avoid undersirable heating of an underlying polymeric substrate (e.g., a TSR value greater than approximately 50), the use of IR-absorbing pigments such as carbon black (CAS# 1333-86-4), lamp black (CAS# 7782-42-5), CI Pigment black 7 (CAS# 98615-67-9), CI Pigment Brown 7 (CAS# 12713-03-0) should be minimized or avoided, and IR-transparent or IR-reflective pigments should be used instead.

To determine the IR absorption characteristics of a particular pigment, the pigment may be provided in a clear medium (e.g., a clear base paint that is not loaded with titanium dioxide) and applied over the surface of a black and white substrate such as a Leneta black and white drawdown card (e.g., a Leneta Form 2C opacity card). The white portion of the substrate will be IR-reflective and the black portion of the substrate will be IR-absorbing.

After applying the pigments and clear medium to the black and white substrate, the UV/Visible/IR spectrum over black and white substrate may be measured with a LAMBDA^{™} 950 UV/Vis/NIR spectrometer with an integrating sphere. IR reflectance is a measure of the amount of IR energy in the incident light (e.g., sunlight) that is reflected by the surface. It is calculated as the integral of the percent reflectance multiplied by the solar irradiance divided by the integral of the solar irradiance in the IR wavelength. ASTM G173-03 specified the terrestrial solar spectrum, i.d., soar irradiance as a function of wavelength. For instance, IR reflectance of 50% means 50% of the IR energy from the incident light is reflected.

The IR reflectance of IR-transparent pigments will depend on the substrate to which the pigments are applied. For example, IR-transparent pigments will be IR-reflective over an IR-reflective substrate such as a white PVC material, while the same pigments will be IR-absorbing over an IR-absorbing substrate such as a black fence painted with lamp black tinted paint. Accordingly, it would be expected that IR-transparent pigments would provide relatively high IR reflectance values over the white portion of the drawdown card and relatively low IR reflectance values over the black portion of the drawdown card. In contrast, IR-reflective pigments would be expected to exhibit relatively high IR reflectance over both the white and black portions of the card (since the IR radiation is reflected back from the pigment and would not make it to the underlying substrate) and IR-absorbing pigments would be expected to exhibit relatively low IR reflectance regardless of whether they are applied over a black or white substrate. The IR reflectance characteristics for IR-transparent, IR-absorbing, and IR-reflective pigments are shown below in Table 1.

**Table 1**

| | IR Reflectance Over White Substrate | IR Reflectance Over Black Substrate |
|---|---|---|
| IR-reflective pigment | High | High |
| IR-transparent pigment | High | Low |
| IR-absorbing pigment | Low | Low |

A number of pigments having a variety of colors were introduced into a clear base paint (i.e., a paint that was not loaded with titanium dioxide), and their IR reflectance over white and over black substrates were plotted. As shown in FIG. 5, pigments that exhibit generally IR-reflective characteristics would tend to be located toward the upper right corner (with a perfectly IR-reflective pigment having a value of 100% IR reflectance over both white and black), pigments that exhibit generally IR-transparent characteristics would tend to be located toward the upper left corner (with a perfectly IR-reflective pigment having a value of 100% IR reflectance over white and 0% over black), and pigments that exhibit generally IR-absorbing characteristics would tend to be located toward the lower left corner (with a perfectly IR absorptive pigment having a value of 0% IR reflectance over both white and black). The closer the pigment is to the associated corner, the more distinctive its characteristic is.

Most IR pigments are supplied in solid powder form. The solid pigments were ground into water-based colorant dispersion by ball milling under high-shear mixing. The colorant dispersions should be ground to a Hegman fineness of a minimum of 6, preferably 7, have a viscosity of between approximately 75 and 95 Krebs Unit to be stable without pigment settling before the evaluation study, and have a pigment solid content of between approximately 20 and 60% by weight depending on the intrinsic characteristics of the pigment.

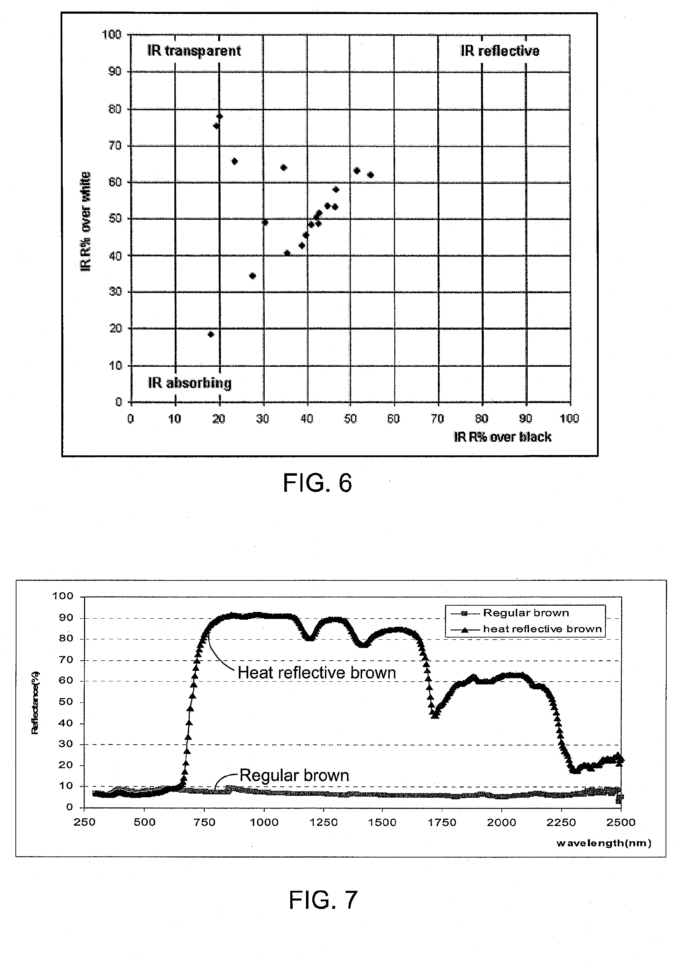

Ten black and eight brown colorants were then tested in clear base paint (not loaded with titanium dioxide), and their IR reflectance over white and over black substrates determined. The values for the IR reflectance are shown in Table 2, along with the IR contrast ratio for the various pigments (e.g., the IR reflectance over a black substrate divided by the IR reflectance over a white substrate, multiplied by 100). The data shown in Table 2 is illustrated graphically in FIG. 6, where the x-axis represents the IR reflectance over a black substrate and the y-axis represents the IR reflectance over a white substrate. Again, pigments that exhibit generally IR-reflective characteristics would tend to be located toward the upper right corner, pigments that exhibit generally IR-transparent characteristics would tend to be located toward the upper left corner, and pigments that exhibit generally IR-absorbing characteristics would tend to be located toward the lower left corner.

**Table 2**

| **Water-Based Colorant Dispersion** | **Pigment solid weight percentage** | **Pigment solid weight percentage** | **IR Reflectance Over Black (%)** | **IR Reflectance Over White (%)** | **IR Contrast Ratio** |
|---|---|---|---|---|---|
| IR black #1 | 52% | 52% | 43 | 49 | 87.8 |
| IR black #2 | 52% | 52% | 18 | 19 | 94.7 |
| IR black #3 | 52% | 52% | 35 | 41 | 85.4 |
| IR black #4 | 52% | 52% | 40 | 46 | 87.0 |
| IR black #5 | 52% | 52% | 39 | 43 | 90.7 |
| IR black #5 | 52% | 52% | 43 | 51 | 84.3 |
| IR black #6 | 25% | 25% | 24 | 66 | 36.4 |
| IR black #7 | 40% | 40% | 30 | 49 | 61.2 |
| IR black #8 | 25% | 25% | 20 | 75 | 26.7 |
| IR black #9 | 52% | 52% | 45 | 54 | 83.3 |
| IR black #10 | 52% | 52% | 41 | 48 | 85.4 |
| IR brown #1 | 52% | 52% | 51 | 63 | 81.0 |
| IR brown #2 | 52% | 52% | 42 | 51 | 82.4 |
| IR brown #3 | 40% | 40% | 35 | 64 | 54.7 |
| IR brown #4 | 52% | 52% | 46 | 53 | 86.8 |
| IR brown #5 | 52% | 52% | 28 | 34 | 82.4 |
| IR brown #6 | 52% | 52% | 47 | 58 | 81.0 |
| IR brown #7 | 52% | 52% | 54 | 62 | 87.1 |
| IR brown #8 | 40% | 40% | 20 | 78 | 25.6 |

The data in Table 2 illustrates that the various black and brown pigments have different IR reflectance performance depending on the substrate. For example, IR brown #1 and IR brown #3 have similar IR reflectance over a white substrate (63 and 64 percent, respectively), but very different IR reflectance over a black substrate (51 and 35 percent respectively), and therefore have differing contrast ratios (81.0 and 54.7). The IR brown #1 pigment would be considered to be more of an IR reflective pigment, whereas the IR brown #3 pigment would be considered to be more of an IR transparent pigment.

According to an exemplary embodiment, the coating uses only pigments that have greater than 50% IR reflectance over a white substrate and less than 40% IR reflectance over a black substrate when measured in the manner described above. According to another exemplary embodiment, the coating uses only pigments that have greater than 60% IR reflectance over a white substrate and less than 30% IR reflectance over a black substrate when measured in the manner described above. According to another exemplary embodiment, the coating uses only pigments that have greater than 70% IR reflectance over a white substrate and less than 20% IR reflectance over a black substrate when measured in the manner described above. According to another exemplary embodiment, the coating uses only pigments that have greater than 60% IR reflectance over a white substrate and an IR contrast ratio of less than approximately 40. According to another exemplary embodiment, the coating uses only pigments that have greater than 60% IR reflectance over a white substrate and an IR contrast ratio of less than approximately 30.

According to other exemplary embodiments in which it is desired to use pigments that are both IR-transparent and IR-reflective, the pigments used will have IR reflectance characteristics such that they are in the upper left (IR-transparent) or upper right (IR-reflective) portion of a plot such as that shown in FIG. 5. This allows one to produce a colorant mixture that includes only pigments that are generally IR-transparent or IR-reflective while reducing the overall IR absorption of the coating. According to an exemplary embodiment in which pigments having both IR-transparent and IR-reflective characteristics will be used, the coating uses only pigments that have greater than 50% IR reflectance over a white substrate and either less than 40% or greater than 60% IR reflectance over a black substrate when measured in the manner described above. According to another exemplary embodiment, the coating uses only pigments that have greater than 60% IR reflectance over a white substrate and less than 30% or greater than 70% IR reflectance over a black substrate when measured in the manner described above. According to another exemplary embodiment, the coating uses only pigments that have greater than 70% IR reflectance over a white substrate and less than 20% or greater than 80% IR reflectance over a black substrate when measured in the manner described above. According to another exemplary embodiment, the coating uses only pigments that have greater than 60% IR reflectance over a white substrate and IR contrast ratios of less than approximately 40 or greater than approximately 80. According to another exemplary embodiment, the coating uses only pigments that have greater than 60% IR reflectance over a white substrate and IR contrast ratios of less than approximately 30 or greater than approximately 80.

The colorant formulations disclosed herein advantageously provide for improved heat reflection of dark-colored coated substrates by combining the beneficial effects that may be obtained by reflecting light in the visible part of the spectrum (e.g., using pigments such as TiO₂) and also by allowing radiation in the visible spectrum to be reflected as well, whether directly through the use of IR-reflective pigments within the colorant formulation or indirectly by using IR-transparent pigments within the colorant formulation that allow the IR radiation to travel through the colorant formulation to reflect off an IR-reflective substrate such as a white PVC or other substrate. As will be appreciated by those reviewing the present disclosure, the colorant formulation may use any suitable combination of TiO₂, IR-reflective, and IR-transparent pigments to provide desired color and heat reflective characteristics for the coating.

### EXAMPLE 1

Two brown colorant mixtures were produced using different pigment formulations as described below and in Table 3.

The first colorant mixture, referred to as the "heat-reflective brown" mixture, included a brown pigment characterized by 20% IR reflectance over a black substrate and 78% IR reflectance over a white substrate for a contrast ratio of 25.6 (IR brown #8 in Table 2) in addition to a black pigment characterized by a 20% IR reflectance over a black substrate and 75% IR reflectance over a white substrate, for a contrast ratio of 26.7 (IR black #8 in Table 2). The brown and black pigments were provided at 46 and 19 weight percent respectively, with the balance of the colorant mixture being a TiO₂ dispersion.

The second colorant mixture, referred to as "regular brown," used a phthalocyanine green pigment at 32 weight percent, a brown iron oxide pigment at 16 weight percent, and a permanent red pigment at 52 weight percent. As will be described in more detail below, the pigments used in the regular brown colorant formulation appear to absorb more IR radiation than the pigments used in the heat-reflective brown formulation, which results in a coating that has a lower TSR value than can be produced using the heat-reflective brown formulation.

**Table 3**

| **Heat-reflective Brown** | | **Regular Brown** | |
|---|---|---|---|
| Raw Material | Amount (Wt.%) | Raw Material | Amount (Wt.%) |
| IR brown #8 | 46% | Phthalocyanine green | 32% |
| IR black #8 | 19% | Brown iron oxide | 16% |
| TiO₂ dispersion | 35% | Permanent red | 52% |
| Total | 100% | Total | 100% |

FIG. 7 illustrates the reflectance spectra for a clear base resins that were tinted with either the infrared reflective brown or the regular brown colorant formulations. Both samples exhibit a dark brown color and show similar reflectance in the 400-700 nm range in the spectra. The samples perform very differently, however, in the infrared range between approximately 800 and 2500 nm. The samples incorporating the heat-reflective brown colorant formulation reflect much more than the regular brown in this range. Overall, samples incorporating the heat-reflective brown colorant formulation exhibited a TSR of greater than 50 over white PVC substrate, whereas the samples incorporating the regular brown colorant formulation exhibited a TSR of less than 10. These results suggest that the heat-reflective brown formulation allows a dark brown color to be produced while still allowing a relatively high (e.g., greater than 50) TSR value to be obtained for the coating.

The ratio of IR brown #8 to IR black #8 within the colorant formulation may be varied to change the hue of the brown color while still providing relatively high TSR values. This would also be the case where other colors of pigments are used for other colorant mixtures (e.g., red and blue pigments, etc.).

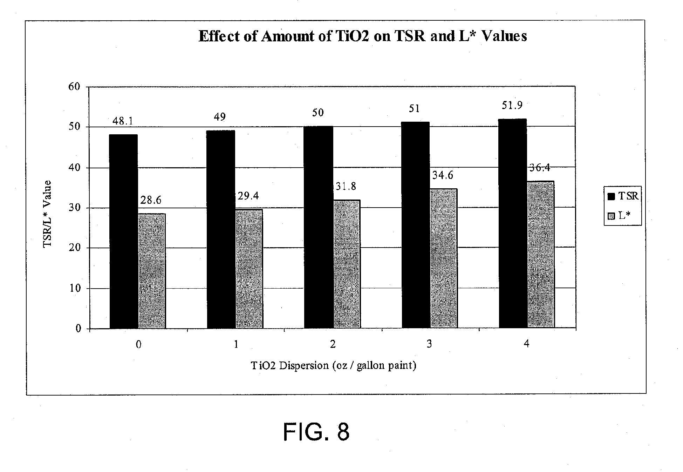

The amount of the TiO₂ dispersion mainly contributes to the lightness of the color and TSR. FIG. 8 illustrates the TSR and L* values for different paint formulations based on the amount of TiO₂ dispersion (in ounces) within a gallon of paint with a fixed amount of colorant pigments (in this case, IR brown #8 and IR black #8 were used at 46% and 19%, respectively). As illustrated, increasing the amount of TiO₂ dispersion tends to increase both the TSR and L* values for the paint formulation.

### EXAMPLE 2

Table 4 describes a formulation for a heat-reflective acrylic-based architectural paint according to an exemplary embodiment. The paint has a dark brown appearance, and exhibits good adherence to a polymeric substrate such as a white PVC material. This heat-reflective paint can be used on exterior vinyl substrate such as vinyl siding to reduce the heat reduced deformation and elongate the property lifetime.

**Table 4**

| **Raw Material** | | **Amount (lbs)** | **Weight %** |
|---|---|---|---|
| **Grind** | | | |
| | Water | 25-200 | 2.7-21.6 |
| | Ethylene Glycol | 4-16 | 0.4 - 1.9 |
| | Copolymer Dispersant | 8-22 | 1.0 - 2.0 |
| | Defoamer | 1-2 | 0.1 - 0.2 |
| | Wetting agent | 2-4 | 0.2 - 0.4 |
| | Nepheline Syenite | 0-350 | 0-32 |
| | Attagel | 0-7 | 0-0.75 |
| | Byk 420 | 0- 1 | 0-0.11 |
| | Mildewcide | 5-10 | 0.6 - 0.9 |
| | | | |
| **Letdown** | | | |
| | Cellulosic thickener | 0-1 | 0-0.1 |
| | Water | 0-3 | 0-2.7 |
| | High shear thickener | 0-4 | 0-4 |
| | Acrylic resin | 400 - 680 | 40 - 76 |
| | Coalescent | 6-30 | 0.7 - 3.4 |
| | Defoamer | 0-4 | 0-0.4 |
| | In-Can preservative | 1 - 3 | 0.1 - 0.4 |
| | F-surfactant | 0-1 | 0-0.15 |
| | Low shear thickener | 4-12 | 0.5 - 1.1 |
| | IR brown #8 | 17-62 | 1.8-7 |
| | IR black # 8 | 7-25 | 0.8 - 2.7 |
| | TiO₂ dispersion | 13 - 48 | 1.4-5 |
| | | | |
| **Mix for 30 minutes to finish** | | | |

### EXAMPLE 3

Table 5 describes a formulation for a dark brown heat-reflective one-part waterborne polyurethane paint according to an exemplary embodiment. This one-part waterborne polyurethane paint develops a hard film, has excellent adhesion to PVC, and exhibits superior heat reflectance. This paint has better adhesion to PVC compared with the formulation in Example 2, and is suitable for use on vinyl substrates where superior adhesion is required.

**Table 5**

| Raw Material | | Amount (lbs) | Weight % |
|---|---|---|---|
| Grind | | | |
| | Water | 20-200 | 2.3 - 23.3 |
| | Coalescencing Solvent | 10-20 | 1.2-2.4 |
| | Nonionic surfactant | 2-6 | 0.2 - 0.7 |
| | Defoamer | 2-5 | 0.2 - 0.6 |
| | Fumed silica | 0-17 | 0-2 |
| | Polyethylene wax emulsion | 0-40 | 0-5 |
| Letdown | | | |
| | HEUR high shear thickener | 20-50 | 2.3 - 5.8 |
| | Polyurethane dispersion | 550 - 700 | 64-81 |
| | HEUR low shear thickener | 2-8 | 0.2 - 0.9 |
| | Biocides | 0-4 | 0-0.5 |
| | IR brown #8 | 17-62 | 1.8-7 |
| | IR black #8 | 7-25 | 0.8 - 2.7 |
| | TiO₂ dispersion | 13 - 48 | 1.4-5 |
| | | | |
| Mix for 30 minutes to finish | | | |

### EXAMPLE 4

Table 6 describes a formulation for a dark brown heat-reflective two-part waterborne polyurethane paint according to another exemplary embodiment. The colorant pigment concentrate can be easily used in COTS (Commercial Off The Shelf) 2K waterborne polyurethane coating systems by adding the color pigment concentrate into clear base part A before mixing it with part B. A loading level of between approximately 4 and 15% is used according to an exemplary embodiment. The 2K polyurethane coating can provide excellent adhesion to PVC, hard film (pencil hardness HB or harder), good solvent resistance to common window cleaners and organic solvents, and superior heat reflectance.

Part A normally made of aqueous dispersion of hydroxyl-functional polyesters or polyacrylates, commonly referred as polyols. Part B is the reactive isocyanate component, commonly referred as polyisocyanate for the low VOC waterborne 2K polyurethane coatings.

**Table 6**

| Part A polyols | | | | |
|---|---|---|---|---|
| | *Add in the colorant pigment concentrate at 4 - 15% by weight* | | | |
| | *Mix in the dark brown Colorants* | | | |

| | Total of Part A base | | 5.00% | 15.00% |
|---|---|---|---|---|
| | IR brown #8 | 46% | 2.30% | 6.90% |
| | IR black #8 | 19% | 0.95% | 2.85% |
| | TiO2 dispersion | 35% | 1.75% | 5.25% |
| | Total of colorant | 100% | | |
| | *Shake for 3-6 minutes to Mix* | | | |

| Part B Polyisocynate | | | | |
|---|---|---|---|---|
| | *Mix part A and part B, and apply the paint within its pot life.* | | | |

### EXAMPLE 5

To assess the effect of the thickness of the coating formulation on the IR reflectance, the dark brown heat-reflective two-part waterborne polyurethane paint described in Example 5 was drawn down on Leneta 2C at different wet film thicknesses (1mil = 25.4 microns). IR reflectance was then measured over white and black substrates. As illustrated in Table 7, increasing the film thickness tends to decrease the IR reflectance over the white substrate and increase the IR reflectance over a black substrate (and, consequently, to increase the IR contrast ratio). Accordingly, for a given paint formulation using pigments selected for their IR transparency and/or IR reflectivity, the overall IR reflectance performance may be modified depending on the thickness of the resulting coating.

**Table 7**

| | IR reflectance (%) | | IR Contrast Ratio (%) |
|---|---|---|---|
| Film thickness | over white | over black | |
| 2 mil | 86.4 | 12.8 | 14.8 |
| 4 mil | 85.2 | 21.5 | 25.2 |
| 6 mil | 84.4 | 24.7 | 29.2 |
| 8 mil | 83.2 | 29.2 | 35.1 |
| 10 mil | 83.0 | 33.3 | 40.1 |

As utilized herein, the terms "approximately," "about," "substantially", and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the invention as recited in the appended claims.

It should be noted that the term "exemplary" as used herein to describe various embodiments is intended to indicate that such embodiments are possible examples, representations, and/or illustrations of possible embodiments (and such term is not intended to connote that such embodiments are necessarily extraordinary or superlative examples).

It is important to note that the articles and coating formulations described herein are illustrative only. Although only a few embodiments have been described in detail in this disclosure, those skilled in the art who review this disclosure will readily appreciate that many modifications are possible without materially departing from the novel teachings and advantages of the subject matter described herein. The order or sequence of any process or method steps may be varied or re-sequenced according to alternative embodiments. Other substitutions, modifications, changes and omissions may also be made in the design, operating conditions and arrangement of the various exemplary embodiments without departing from the scope of the present invention.

## Claims

1. A colorant formulation for use in paint comprising:
a titanium dioxide dispersion; and
at least one pigment that has an infrared reflectance of at least approximately 60 percent when provided in a clear base over a white substrate and less than approximately 40 percent when provided in a clear base over a black substrate;
wherein the colorant formulation does not include pigments that have an infrared reflectance of less than approximately 60 percent when provided in a clear base over a white substrate; and
wherein the colorant formulation is configured to provide a total solar reflectance for the paint of at least about 50 percent when provided over a white substrate.

2. The colorant formulation of claim 1, wherein the at least one pigment has an infrared reflectance of at least approximately 70 percent when provided in a clear base over a white substrate and less than approximately 30 percent when provided in a clear base over a black substrate.

3. The colorant formulation of claim 1, wherein the colorant formulation further comprises at least one pigment that has an infrared reflectance of at least approximately 60 percent when provided in a clear base over a white substrate and at least approximately 60 percent when provided in a clear base over a black substrate.

4. The colorant formulation of claim 1, wherein the colorant formulation further comprises at least one pigment that has an infrared reflectance of at least approximately 70 percent when provided in a clear base over a white substrate and at least approximately 70 percent when provided in a clear base over a black substrate.

5. The colorant formulation of claim 1, wherein the colorant formulation has an L* value of less than approximately 40.

6. The colorant formulation of claim 5, wherein the colorant formulation has an L* value of greater than approximately 32.

7. The colorant formulation of claim 1, wherein the colorant formulation has a dark brown color.

8. A paint comprising:
a base resin formulation; and
a colorant formulation according to any of claims 1 to 7.

9. The paint of claim 8, wherein the paint has a dark brown color, or wherein the base paint formulation is a 100% acrylic formulation, or wherein the base paint formulation is a one component or two component polyurethane formulation

10. A coated article comprising:
a polymeric substrate having an L* value of at least 80 and a total solar reflectance of at least 80;
a coating comprising a titanium oxide dispersion and at least one type of pigment, wherein the coating does not include pigments that have an infrared reflectance of less than approximately 60 percent when provided in a clear base over a white substrate;
wherein the coating has an L* value of less than 40 and a total solar reflectance of greater than 50.

11. The coated article of claim 10, wherein the at least one type of pigment comprises a first pigment that has an infrared reflectance of at least approximately 60 percent when provided in a clear base over a white substrate and less than approximately 40 percent when provided in a clear base over a black substrate.

12. The coated article of claim 11, wherein the at least one type of pigment further comprises a second pigment that has an infrared reflectance of at least approximately 60 percent when provided in a clear base over a white substrate and greater than approximately 60 percent when provided in a clear base over a black substrate.

13. The coated article of claim 12, wherein the first pigment has an infrared reflectance of at least approximately 70 percent when provided in a clear base over a white substrate and less than approximately 30 percent when provided in a clear base over a black sub strate.

14. The coated article of claim 13, wherein the second pigment has an infrared reflectance of at least approximately 70 percent when provided in a clear base over a white substrate and greater than approximately 70 percent when provided in a clear base over a black sub strate.

15. The coated article of claim 10, wherein the polymeric substrate comprises polyvinyl chloride, or wherein the polymeric substrate has a total solar reflectance of greater than approximately 80%, or wherein the coated article is a component of a window, or wherein the coated article is a component of a door, or wherein the coated article is vinyl siding, or wherein the coating has a dark brown color.

16. A method for preparing a paint formulation, comprising:
providing a base paint formulation;
mixing a colorant formulation into the base paint formulation to produce a paint having an L* value of less than approximately 40;
wherein the colorant formulation comprises a titanium dioxide dispersion and at least one type of pigment, wherein the colorant formulation does not include pigments that have an infrared reflectance of less than approximately 60 percent when provided in a clear base over a white substrate.

17. The method of claim 16, wherein the at least one type of pigment comprises a first pigment that has an infrared reflectance of at least approximately 60 percent when provided in a clear base over a white substrate and less than approximately 40 percent when provided in a clear base over a black substrate.

18. The method of claim 17, wherein the at least one type of pigment comprises a first pigment that has an infrared reflectance of at least approximately 70 percent when provided in a clear base over a white substrate and less than approximately 30 percent when provided in a clear base over a black substrate.

19. The method of claim 17, wherein the colorant formulation further comprises a second pigment that has an infrared reflectance of at least approximately 60 percent when provided in a clear base over a white substrate and at least approximately 60 percent when provided in a clear base over a black substrate.

20. The method of claim 19, wherein the second pigment that has an infrared reflectance of at least approximately 70 percent when provided in a clear base over a white substrate and at least approximately 70 percent when provided in a clear base over a black sub strate.

21. The method of claim 16, wherein the base paint formulation is a 100% acrylic formulation, or wherein the base paint formulation is a one component or two component polyurethane formulation, or wherein the paint formulation has a dark brown color.
